Europäisches Patentamt

European Patent Office

Office européen des brevets

(11) Veröffentlichungsnummer: **0 355 671**

**A2**

(12) **EUROPÄISCHE PATENTANMELDUNG**

(21) Anmeldenummer: 89115056.7

(22) Anmeldetag: 16.08.89

(51) Int. Cl.⁴ **B65G 53/46**

(30) Priorität: 18.08.88 DE 3828075

(43) Veröffentlichungstag der Anmeldung:
28.02.90 Patentblatt 90/09

(84) Benannte Vertragsstaaten:
CH FR GB IT LI

(71) Anmelder: **KATHARINA KIEBEL
MASCHINENBAU UND
ROTATIONSSCHLEUSENTECHNIK**
Hülser-Strasse 764
D-4150 Krefeld(DE)

(72) Erfinder: **Kiebel, Katharina**
Haseldonk 1
D-4150 Krefeld(DE)

(54) **Eintrag-Austrag-Rotationsschleuse.**

(57) Zur Verringerung des Verschleißes und Erhöhung des Füllungsgrades gegenüber herkömmlichen Zellenradschleusen mit zylindrischen Rotoren, ist hierbei der Rotor kugelig mit schräg nach unten geneigter Welle angeordnet. Durch die kugelige Ausführungsform wird die mittlere Umfangageschwindigkeit des Rotors niedriger und die reibende Oberfläche um ca. 1/3 geringer bei gleichbleibendem Rotorvolumen; beim Einsatz in pneum. Förderanlagen ist hierdurch auch die Leckrate entsprechend kleiner. Durch die geneigte Welle wird zum einen das Haupt-Fördervolumen im unteren Bereich des Rotors gefördert wodurch große Füllengsgrade erreicht werden, zum anderen das Fördergut von der Lagerdurchführung wegtransportiert. Bei besonders gut fließenden Gütern wie Kunststoffgranulaten werden durch Verengung des Einlaufquerschnittes bei gleichzeitiger Erhaltung der Innenraum-Kugelform Füllungsgrade von mehr als 80% erreicht (ca. 60% bei zylindrischen Rotoren).

Ansicht "A"

## Ein- Austrag- Rotationsschleuse für Schüttgüter

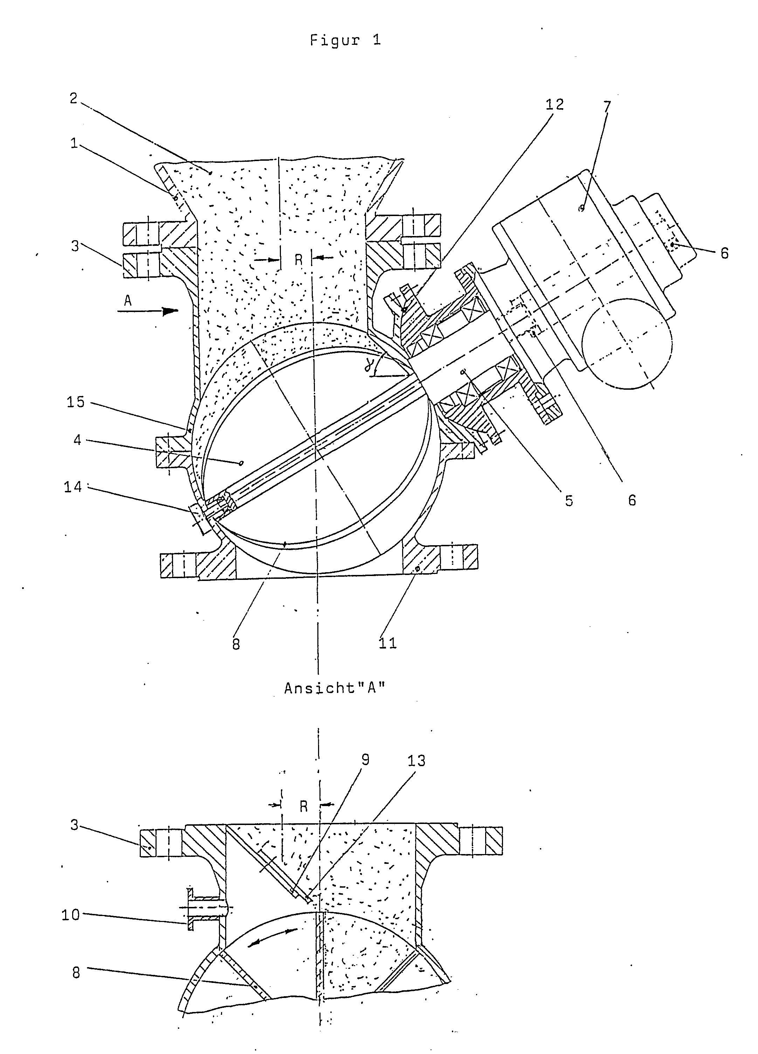

Die Erfindung bezieht sich gemäß dem Oberbegriff des Anspruches 1. auf eine Beschickungs- und Entleerungseinrichtung für Schüttgüter mit mindestens einem, in einem Gehäuse zwischen Einlaufstutzen und Entleerungsstutzen drehbarem, schrägliegenden Zellenrad mit einer darin vorgesehenen mehr oder weniger großen Zahl radialer Zwischenwände, wodurch sektenförmige, nach außen hin offene Zellen gebildet werden, geeignet für Dosier- und Abfüllanlagen. Bekannterweise sind Beschickungs-und Entleerungseinrichtungen ausgestattet mit zylindrischen, seitlich offenen oder geschlossenen, waagerecht oder senkrecht angeordneten Zellenrädern sowie mit zwei durch das Zellenrad getrennte Lagerstellen. Nachteilig ist bei solchen Schleusen, daß beim Fördern das Schüttgut stetig umgewälzt wird, aus der unverschlossenen Zellenöffnung austritt und schließend an der Gehäuseinnenwand vorbei zum Austrag gelangt. Hierbei kommen unvermeidlich Schüttgutanteile in den Spalt zwischen Rotoraußenwand und Gehäuseinnenwand, wo die Gutteilchen zerrieben werden und zu einem schnellen Verschleiß der produktberührten Schleusenteile führen, insbesondere bei zylindrischen Zellenrädern, bei denen das Verhältnis zwischen Rotorvolumen und den reibenden Flächen sehr nachteilig ist, und das Fördergut über den natürlichen Böschungswinkel die Abdichtungen zwischen den Lagerstellen erreicht und dort zusätzlichen Verschleiß verursacht. Es ist die Aufgabe der vorliegenden Erfindung, ein Zellenrad vorzusehen, welches bei gleichem Zellenradvolumen mit gleicher Zellenzahl und Stegdicke ein besseres Verhältnis zwischen Rotorvolumen und den reibenden Flächen aufweist sowie das Fördergut von der Lagerdichtung fernhält. Diese Aufgabe wird im kennzeichnenden Teil von Anspruch 1. gelöst und in Figur 1 dargestellt.

Eine besondere Ausführung ist im kennzeichenden Teil von Anspruch 2. gelöst nach dem der Rotor fliegend gelagert ist, wodurch nur eine Lagerstelle abgedichtet werden muß.

Eine weitere Ausführung ist im kennzeichnenden Teil von Anspruch 3 gelöst. Bei dieser Ausführung kann der Spalt zwischen Rotoraußendurchmesser und Gehäuseinnendurchmesser im unteren Bereich des Zellenrades, in dem der größte Teil des Gutes gefördert wird, der Produktkörnung angepaßt werden.

In einer weiteren Ausführungsform entsprechend dem kennzeichnenden Teil von Anspruch 4. ist die Achse waagerecht angeordnet. In einer besonderen Ausführungsform ist die Rotorlagerung in einem Kugelgelenk (12) angeordnet, wodurch der Spalt zwischen Rotoraußendurchmesser und Gehäuseinnendurchmesser radial in alle Richtungen verändert werden kann.

In einer weiteren Ausführungsform ist es vorteilhaft, den Einlaufstutzen (3) axial um das variable Maß R zu verschieben, damit die Schüttgutsäule über ihren natürlichen Böschungswinkel von der Abdichtung ferngehalten wird.

In einer weiteren Ausführungsform kann der Einlaufstutzen (3) exzentrisch mit dem variablen Radius "R" um die Mittenachse an beliebiger Stelle angeordnet sein.

In einer besonderen Ausführungsform kann der Auslaufstutzen (11) exzentrisch mit dem variablen Radius "R" um die Mittenachse angeordnet sein. In einer weiteren Ausführungsform ist der Rotor beidseitig gelagert, wobei sich die untere Lagerung (14) innerhalb der Achse befindet und somit vom Produkt nicht erreicht werden kann.

In einer besonderen Ausführungsform kann es vorteilhaft sein, im Einlaufstutzen 3 ein Abweiserblech (9) mit verstellbarem Schiebar (13) an beliebiger Stelle einzubauen und den darunterliegenden Hohlraum über den Stutzen 10 abzusaugen.

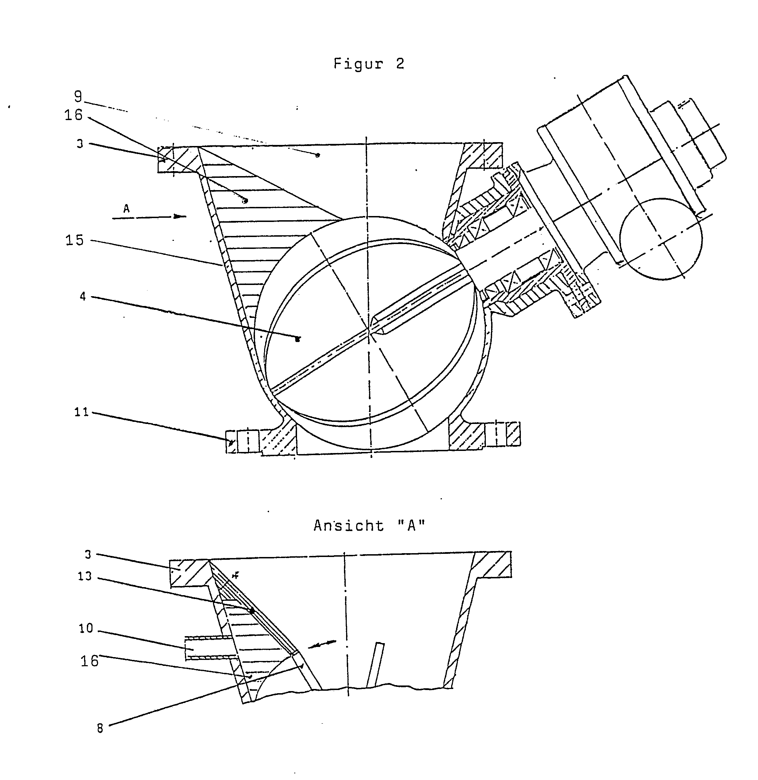

Eine weitere Ausführungsform ist in Figur 2 dargestellt. Hierbei ist das Außengehäuse (15) ungeteilt, die Montage des Rotors erfolgt zuerst von oben und dann die der Produkt-Einlaufschurre (9).

Bei einer vorteilhaften Ausführungsform ist die Einlaufschurre aus Vollmaterial (16) und dem Innenraum angepaßt.

## Ansprüche

1. Beschickungs- und Entleerungsvorrichtung in Form einer Rotationsschleuse für Schüttgüter mit mindestens einem, in einem Gehäuse zwischen Einlaufstutzen und Entleerungsstutzen drehbaren Zellenrad (4) mit einer mehr oder weniger großen Zahl radialer Zwischenwände (8) darin, wodurch sektenförmige, nach außen hin offene Zellen gebildet werden, dadurch gekennzeichnet, daß der Rotor eine Kugel darstellt, wodurch ein ideales Verhältnis zwischen Rotorvolumen und reibenden Flächen erreicht wird, die Rotorachse nach unten geneigt angeordnet ist, wodurch das Haupt-Fördervolumen im unteren Bereich des Rotors gefördert wird und somit von der Lagerung ferngehalten wird.

2. Beschickungs- und Entleerungsvorrichtung in Form einer Rotationsschleuse für Schüttgüter, dadurch gekennzeichnet, daß der Rotor fliegend gelagert ist.

3. Beschickungs- und Entleerungsvorrichtung in Form einer Rotationsschleuse für Schüttgüter, dadurch gekennzeichnet, daß der Rotor axial verstellbar ist.

4. Beschickungs- und Entleerungsvorrichtung in Form einer Rotationsschleuse für Schütt güter, dadurch gekennzeichnet, daß die Rotorachse waagerecht angeordnet ist.

5. Beschickungs- und Entleerungsvorrichtung in Form einer Rotationsschleuse für Schüttgüter, dadurch gekennzeichnet, daß das Lagergehäuse mit einer Kugelschale angeordnet ist.

6. Beschickungs- und Entleerungsvorrichtung in Form einer Rotationsschleuse für Schüttgüter, dadurch gekennzeichnet, daß der Einlaufstutzen in axialer Richtung außermittig versetzt ist.

7. Beschickungs- und Entleerungsvorrichtung in Form einer Rotationsschleuse für Schüttgüter, dadurch gekennzeichnet, daß der Einlaufstutzen an beliebiger Stelle angeordnet ist.

8. Beschickungs- und Entleerungsvorrichtung in Form einer Rotationsschleuse für Schüttgüter, dadurch gekennzeichnet, daß der Auslaufstutzen an beliebiger Stelle angeordnet ist.

9. Beschickungs- und Entleerungsvorrichtung in Form einer Rotationsschleuse für Schüttgüter, dadurch gekennzeichnet, daß der Rotor beidseitig gelagert ist.

10. Beschickungs- und Entleerungsvorrichtung in Form einer Rotationsschleuse für Schütt güter, dadurch gekennzeichnet, daß im Einlaufstutzen an beliebiger Stelle ein Schiebar und Absaugstutzen eingesetzt ist.

11. Beschickungs- und Entleerungsvorrichtung in Form einer Rotationsschleuse für Schüttgüter, dadurch gekennzeichnet, daß das Gehäuse (15) ungeteilt ist.

12. Beschickungs- und Entleerungsvorrichtung in Form einer Rotationsschleuse für Schüttgüter, dadurch gekennzeichnet, daß die Einlaufschurre (16) dem Innenraum angepaßt ist.

Figur 1

Ansicht "A"

Figur 2

Ansicht "A"